(19) Europäisches Patentamt / European Patent Office / Office européen des brevets

(11) **EP 3 885 032 A1**

(12) **EUROPEAN PATENT APPLICATION**

(43) Date of publication:
**29.09.2021 Bulletin 2021/39**

(51) Int Cl.:
***B01D 67/00*** *(2006.01)*   ***B01D 39/16*** *(2006.01)*

(21) Application number: **20382224.2**

(22) Date of filing: **24.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Fundación Tecnalia Research & Innovation**
  **20009 San Sebastián, Guipúzcoa (ES)**
• **Fundación Tekniker**
  **20600 Eibar (Guipuzkoa) (ES)**

(72) Inventors:
• **MURILLO HERNANDEZ, Nieves**
  **E-20009 Donostia-San Sebastián (Gipuzkoa) (ES)**
• **MAUDES PUENTEDURA, Jon**
  **E-20009 Donostia-San Sebastián (Gipuzkoa) (ES)**

• **PEREZ MARQUEZ, Ana**
  **E-20009 Donostia-San Sebastián (Gipuzkoa) (ES)**
• **BLANCO MIGUEL, Miren**
  **20600 Eibar (Gipuzkoa) (ES)**
• **MONTESERIN VILELA, Cristina**
  **20600 Eibar (Gipuzkoa) (ES)**
• **GOMEZ HERRERO, Estibaliz**
  **20600 Eibar (Gipuzkoa) (ES)**

(74) Representative: **Balder IP Law, S.L.**
  **Paseo de la Castellana 93**
  **5ª planta**
  **28046 Madrid (ES)**

Remarks:
A request for correction of the description has been filed pursuant to Rule 139 EPC. A decision on the request will be taken during the proceedings before the Examining Division (Guidelines for Examination in the EPO, A-V, 3.).

(54) **SMART FILTERS WITH IMPROVED PROPERTIES IN FILTRATION AND ANTIBACTERIAL EFFICIENCY APPLICABLE IN FLUIDS**

(57)   The invention relates to a filter for particles having sizes of less than 10 micrometers, with a structure based on electrospun fibers from one or more polymers, the fibers being characterized in that they have a diameter between 30 and 1000 nm, and in that they have along their structure thickenings of a diameter of between 0.4 and 10 micrometers, with a thickening density of at least 25,000 thickenings per each $cm^2$ of filter. The invention also relates to a method for manufacturing the filter, uses thereof and a device incorporating same.

**FIGURE 2**

SEM micrograph of a PC nanomesh manufactured with Process B (left) and manufactured with Process A (right).

## Description

### Field of the invention

The present invention relates to a filter from electrospun fibers, with micrometric and/or nanometric diameters, said filter having a structure of fibers with beads or thickenings, also of a micro- or nanometric size; the fibers may furthermore be doped in their interior and/or coated, for additional functionalization thereof. They can be used in the filtration of fluids, for example, for improved air filtration, particularly for increasing the filtration efficiency of small-sized particles, as well as for improving their antibacterial and photocatalytic properties, and therefore they allow them to be self-cleaning. It also relates to the process of manufacturing the filters, as well as to their use.

### Background of the invention

The need for clean and safe air quality is a global priority [*http://ec.euroDa.eu/environment/air/quality/; https://airnow.gov/index.cfm?action=airnow.main*], with numerous regulatory directives [*http://ec.europa.eu/environment/air/legis.htm; http://www.mapama.gob.es/es/calidad-y-evaluacion-ambiental/temas/atmosfera-y-calidad-del-aire/calidad-del-aire/normativa/*], as well as regulation for safety levels, which must be maintained both in open environments, and in household or industrial interiors, or, in the case of the use of respiratory personal protection equipment [*http://www.insht.es/Dortal/site/EEpi/menuitem.0c9dc88588aacbc9a614c52a18          Q311a0/?vgnextoid=7bfb791385e83310VgnVCM1000008130110aRCRD*].

The problem with particles suspended in air is a serious public health threat, in addition to having an effect on climate, ecosystems and visibility [*Nel, A. Air pollution-related illness: effects of particles. Science 308, 804-806 (2005); Mahowald, N. Aerosol indirect effect on biogeochemical cycles and climate. Science 334, 794-796 (2011); Horton, D. E., Skinner, C. B., Singh, D. & Diffenbaugh, N. S. Occurrence and persistence of future atmospheric stagnation events. Nat. Clim. Change 4, 698-703 (2014); Andreae, M. O. & Rosenfeld, D. Aerosol-cloud-precipitation interactions. Part 1. The nature and sources of cloud-active aerosols. Earth Sci. Rev. 89, 13-41 (2008)*]. Particulate matter (PM) can be defined, in general terms, as a complex mixture of solid and/or liquid particles, suspended in air, with a wide range of compositions and sizes [*European Environment Agency "Air Quality in Europe - 2013 Report" No 9/2013 ISSN 1725-9177*], Particulate matter, PM, is classified as PM2.5 for particulate matter with diameters of 2.5 micrometers or less, and as PM10 for particles having diameters of 10 micrometers or less.

90% of the population is exposed to unhealthy levels of particles (that is, exposure to particles PM2.5 and PM10) coming from human, industrial or personal activity; furthermore there are the protection needs derived from professional activities, where there is a risk in the case of exposure to particles smaller than <100nm, such as microbiological contaminants, fumes (coming from oils, combustion, cigarettes, etc.) and carbon black, inter alia, in addition to new nanomateriales in the production or industrialization phase.

The problem with protection for workers exposed to nanomateriales in occupational settings, where nanomaterial is understood to be one in which at least an external dimension of all or part of the particles forming them is less than 100 nanometers [*Seguridad y salud en el trabajo con nanomateriales, Instituto Nacional de Seguridad e Higiene en el Trabajo (INSHT) Occupational health and safety with nanomaterials, National Occupational Safety and Hygiene Institute*], is centered on the suitable and safe protection of said workers when they are exposed in their occupational setting.

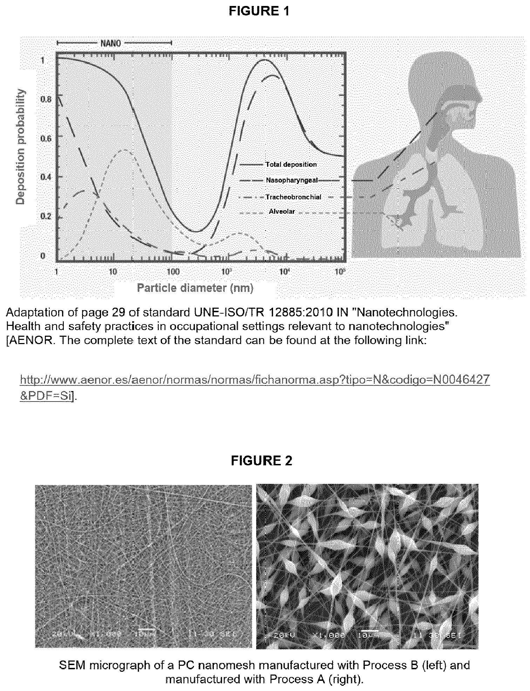

Figure 1 shows the deposition probability of the particles of less than 100nm, and the regions of the respiratory system in which they are deposited. Furthermore, it must be taken into account that not all types of particles are eliminated by the body, where their elimination depends on size, morphology and chemical composition [*Seguridad y salud en el trabajo con nanomateriales, Instituto Nacional de Seguridad e Higiene en el Trabajo (INSHT)*].

With respect to personal protection equipment to prevent workers from being exposed to nanometric aerosols (<100nm), there are recent studies on the lack of efficiency, even in certified protection equipment, showing high penetration percentages of nanometric particles between 10 nm and 100 nm. Said loss in efficiency, which may reach 10% in standard testing at 85 l/min [*Ronald E. Shaffer Æ Samy Rengasamy, J Nanopart Res (2009) 11:1661-1672*], may be increased up to 30%, depending on the peak inhalation rate of the user.

The problem with protection against biothreats present in the air, bioaerosols, or viruses coming from the biopharmaceutical sector lies in the potential survival of microorganisms, of their re-aerosolization, the reuse of protection equipment, the suitable selection and use of the protection equipment, provided that the assigned protection factor is suitable. In relation to biological threats, even with filtration systems with high efficiencies, it cannot be ensured that the personal protection equipment prevents the inhalation of all particles, and therefore they cannot eliminate the risk of exposure, infection and disease [*Qiang Wang, Laleh Golshahi, Da-Ren Chen, Aerosol and Air Quality Research, 17: 2681-2690, 2017*].

Furthermore there is a general problem associated with any type of filter, which consists of cleaning and elimination of particles, biothreats, viruses or any type of physical or chemical contaminant that may be trapped in it.

These unresolved problems in the field of filtering materials for filtration systems for industrial use, household use, for use in transport vehicles, as personal protection equipment, etc., and the use thereof in said devices, have previously been addressed with a wide range of solutions.

Micro/nanofibers, particularly the polymer nanofibers, are promising for various applications, such as the administration of drugs or tissue engineering [Hai-Sheng Wang, Guo-Dong Fu, Xin-Song Li, Functional Polymeric Nanofibers from Electrospinning, Recent Patents on Nanotechnology 2009, 3, 21-31; Li, S., Hashi, C., Huang, N.F., Kurpinski, K.: WO07090102A2 (2007)], due to a very high area/volume ratio, flexibility in surface functionalities and better mechanical properties. Among the various technologies for manufacturing micro/nanofibers, the process known as electrospinning is perhaps the most versatile process.

What makes this technology so versatile is that functional micro/nanofibers can be prepared by electrospinning polymers mixed with additional compounds such as nanoparticles, carbon nanotubes, catalysts, enzymes, etc. Furthermore, functional micro/nanofibers prepared from the surface modification of micro/nanofibers are an important family in various sectors. Based on the advantages described above, electrospinning provides multiple possibilities for the nanostructuring of materials and provides the corresponding functionality to such materials. Both the inner and outer modifications of the nanofibers will furthermore allow the filters to be readily cleaned by means of UV technologies or without the need for radiation, which provides an improved cleaning for a more efficient operation, a longer service life of the filter or filtration system and lower service requirements.

This technology is based on the continuous generation of a jet by means of immobilizing charges on the surface of a liquid droplet by applying a high voltage. The filters of the present invention have been developed from the most basic electrospinning process, referred to as needle electrospinning. It consists of a syringe in which the solution to be electrospun is located, a needle to which a high voltage is applied, and a grounded collector in which the fibers are collected. The jet that is formed at the outlet of the needle is drawn during its flight to the collector, its diameter decreasing to the nanometric scale.

### Summary of the Invention

The first object of the present invention is a filter for particles having sizes of less than 10 micrometers, with a structure based on electrospun fibers from one or more polymers, selected from at least one of the groups of polycarbonates, polyamides, polyesters, polyurethanes, styrene groups, halogen groups and biopolymers, the fibers being characterized in that they have a diameter between 30 and 1000 nm, and in that they have along their structure thickenings of a diameter of between 0.4 and 10 micrometers, with a thickening density of at least 25000 thickenings per $cm^2$ of filter.

A second object of the invention is a method for manufacturing the filter of the invention.

A further object of the present invention is the use of the filter of the invention for filtering nanoparticles with at least a dimension less than 10 micrometers contained in air or water.

Another object consists of devices incorporating a filter according to the present invention.

### Detailed Description of Figures

Figure 1 Figure adapted from page 29 of standard UNE-ISO/TR 12885:2010 IN " *Nanotechnologies. Health and safety practices in occupational settings relevant to nanotechnologies"* [AENOR; the complete text of the standard can be found at the following link: http://www.aenor.es/aenor/normas/normas/fichanorma.asp?type=N&codi go=N0046427&PDF=Si].

Figure 2: SEM micrograph of a polycarbonate (PC) nanomesh manufactured by means of:

 left: process B described below;
 right: process A described below.

Figure 3: Photograph of a PC filter prepared by means of process B, 47 mm in diameter.

Figure 4: Graph depicting the filtration efficacy results for samples A1 and A2; ∆P measured= 2.6 mm H2O; test penetration rate 0.8 cm/s

Figure 5: Graph depicting the efficacy results for sample B3; ∆P measured= 9.2 mm H2O; test penetration rate 0.8 cm/s.

Figure 6: Graph depicting the efficacy results for a reference sample (glass fiber); ∆P measured= 8 mm H2O; test penetration rate 0.8 cm/s.

Figure 7: Graph depicting the filtration efficacy results for all the samples; test penetration rate 0.8 cm/s.

Figure 8: Graph depicting the quality factor (fq) results for all the samples; test penetration rate 0.8 cm/s.
Figure 9: Photo of the filter coated with the sol-gel solution
Figure 10: SEM micrographs of the polycarbonate (PC) covers:

a) uncoated
b) coated with the sol-gel formulation modified with silver.

Figure 11: Photograph of the filtration membranes (Microinstant® CCA Chromogenic Coliform Agar) used for filtering fecal water in contact with PC filters without being exposed to UV radiation. From left to right, uncoated PC filter and coated filter.
Figure 12: Photograph of the filtration membranes (Microinstant® CCA Chromogenic Coliform Agar) used for filtering fecal water in contact with the PC filters exposed to UV radiation. PC filters according to the invention, uncoated on the left, coated on the right.
Figure 13:

Left. PC filter without coating (A4).
Right. Filter with Ag coating (AA1).

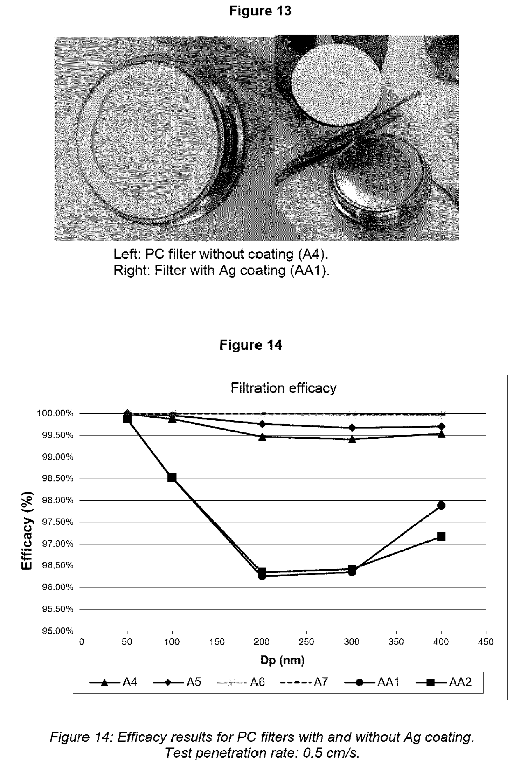

Figure 14: Graph depicting the efficacy results for PC filters with and without silver (Ag) coating. Penetration rate: 0.5 cm/s.

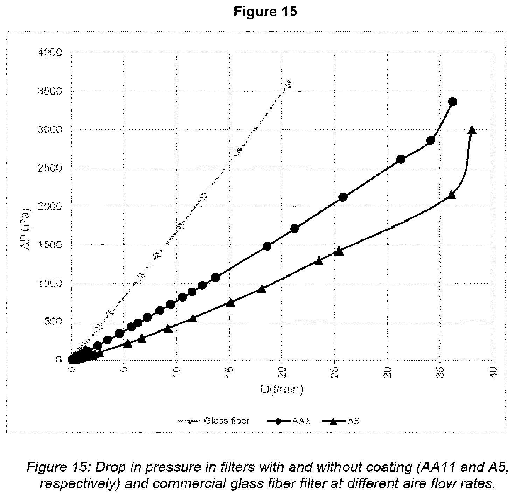

Figure 15: Graph depicting the results of the pressure drop in filters with and without coating (AA11 and A5, respectively) and commercial glass fiber filter at different air flows.

**Detailed description of the invention.**

Filter for particles

Micro/nanofibers developed by means of electrospinning are known to have characteristics such as a smaller diameter, orders of magnitude less than conventional fibers, a high surface-volume ratio and high porosity. These properties mean that the influence of the air flow rate is almost close to nil, improving filtration phenomena. *[Hinds, W. C., Aerosol Technology. Properties, Behaviour and Measurement of Airborne Particles. (2nd Ed.) New York, John Wiley & Sons, 1999, 483p]*, It has also been described that the subsequent incorporation of micro/nanobeads of a different composition in a fibrillar structure used as a filter improves the efficiency thereof *[Microbead/nano-fiber composite air filtration material with gradient structure and preparation method thereof. CN105999852]*.
However, in the present invention, there a process has been developed for manufacturing, in a single step, a structure of fibers and beads of one and the same material, with suitable mechanical and physicochemical properties, which allows its use as a filter, with a quality factor greater than 400% with respect to a conventional glass fiber filter by PALL, used as a reference. A filter which additionally has antibacterial and/or photocatalytic properties can be produced in the same single process according to the invention by means of incorporating nanoparticles or active agents in the interior of the fibers, or on their exterior. When said nanoparticles or active agents are on the interior, they are sometimes referred to as "doped" fibers in the scope of the present invention; when they are located on the exterior of the fibers, they form particle aggregates. Dual functionalization of the fibers is also possible, that is, they are simultaneously doped, incorporating functional nanoparticles or active agents in the interior of the fibers, and also coated in the external portion with a nanometric coating, which may optionally be modified with nanoparticles or active agents. In such case, the nanoparticles or active agents doped in the nano/microfibers can be the same as or different from those present in the coating or on the exterior of the fibers.
Therefore, a first object of the present invention is a filter, with a structure based on electrospun fibers from one or more polymers, for filtering particles having sizes of less than 10 micrometers, the fibers being characterized in that they have a diameter between 30 and 1000 nm, preferably between 200 and 700 nm, and in that they have along their structure thickenings of a diameter of between 0.4 and 10 micrometers, preferably between 1 and 6 micrometers, with a thickening density of at least 25000 thickenings per each $cm^2$ of filter, preferably at least 50000 thickenings per $cm^2$, more preferably at least 100000 thickenings per $cm^2$, still more preferably at least 175000 thickenings per $cm^2$, and particularly preferably at least 250000 thickenings per $cm^2$.
Among the polymers that this structure may have are polyesters, polyurethanes, polyamides, styrene groups, halogen groups and biopolymers *[Chenyu Wang, Jun Wang, Liangdan Zeng, Ziwen Qiao, Xiaochen Liu, He Liu, Jin Zhang, and Jianxun Ding. Molecules. 2019 Mar; 24(5): 834] [Chuan Yin, Rino Okamoto, Mikihisa Kondo, Toshihisa Tanaka, Hatsuhiko Hattori, Masaki Tanaka, Hiromasa Sato, Shota Iino and Yoshitaka Koshiro. Nanomaterials 2018 9(1):34]*. Polycarbonates are a polymer of particular interest for manufacturing filters by means of electrospinning according to the present invention. Therefore, preferably at least one of the one or more polymers is a polycarbonate, preferably the at least one or more polymers is a polycarbonate.

The filter object of the invention will particularly improve the filtration efficiency of small-sized particles, PM10, PM2.5, or particles with a diameter < 100nm; as well as the antibacterial and/or photocatalytic efficiency thereof, in the event that the fibers comprise, in their interior or their exterior, nanoparticles or active agents.

It has been demonstrated by means of the present invention that it is possible to provide filters made of nano/microfibers with beads obtained by electrospinning with added properties, in addition to the filtration capacity per se associated with the filter. This capacity can be enhanced by means of incorporating nanoparticles of a diverse nature (organic, inorganic, ceramic, carbonaceous) or active agents in the interior of the nanofibers and/or modifying their surface by means of nanoparticles or active agents, for example by means of coatings based on sol-gel technology, to provide the filters with antibacterial and photocatalytic properties.

By means of these organic and/or inorganic coatings optionally modified with nanoparticles and/or active agents (such as biocidal and/or bacteriostatic agents for example), nanoporous filters with advanced properties are achieved (e.g. antibacterial, photocatalytic and antifouling properties, etc.), for the filtration of fluids, particularly water and/or air.

Therefore, the present invention also relates to a filter like the one defined above for a first object of the invention, characterized in that the fibers in the interior of its structure comprise nanoparticles or active agents, with the nanoparticles having at least one dimension of less than 100 nm and being organic, inorganic, ceramic or carbonaceous, and the active agents being selected from biocidal and/or bacteriostatic agents of the type such as isothiazolones, benzoisothiazolones, chloramines, alkyl or aryl chlorides, or silver salts.

Likewise, the invention relates to a filter like the one defined above for a first object of the invention, characterized in that the fibers are coated in the external portion with an inorganic or organic nanometric coating, optionally modified with nanoparticles or active agents, with the nanoparticles having at least one dimension of less than 100 nm, and being organic, inorganic, ceramic or carbonaceous, and the active agents being selected from biocidal and/or bacteriostatic agents of the type such as isothiazolones, benzoisothiazolones, chloramines, alkyl or aryl chlorides, or silver salts. The nanometric coating may be, for example, of the type such as silane, siloxane or self-assembled polymer monolayers, inter alia.

As indicated above, the fibers of the filter according to the invention may both comprise nanoparticles or active agents in the interior of its structure, and also be coated on their external portion by means of a coating optionally modified with nanoparticles or active agents.

By way of example, the nanoparticles, both in the interior and the exterior of the fibers, may have antibacterial and/or photocatalytic properties. For example, said nanoparticles can be selected from at least one of $TiO_2$, Ag, $CeO_2$ and CuO.

The active agents, both in the interior and the exterior of the fibers, may be, for example, one or more silver salts, such as for example silver nitrate ($AgNO_3$), silver chloride (AgCl) or silver sulfate ($Ag_2SO_4$).

A second object of the invention is a method for preparing the filter according to the invention defined above, that is, with fibers comprising a structure with thickenings, which comprises the stages of:

i) preparing a solution based on a polymer or mixture of polymers with its solvent, wherein the percentage by weight of the polymer in the solution is 2-25%;

ii) mechanically stirring the solution until the complete dissolution of the polymer or mixture of polymers;

iii) electrospinning the fibers from the predispersion prepared in stage ii).

The solvents used will depend on the polymer or polymers that are going to be used, and they are those commonly used in electrospinning, and are therefore known by the person having average skill in the art.

In general the predispersion, that is, the precursor solution of the electrospinning process, must be prepared such that there is a viscosity, surface voltage and conductivity suitable for generating the structure of thickenings of process A. In the specific case described in the examples of the present invention, a solution with 20% by weight of PC at a DMF/THF 50/50 solvent ratio by weight has been prepared in order to obtain such structure. If the microstructure is not obtained with the indicated thickenings, maintaining the solvent ratio, it will be necessary to gradually reduce the percentage by weight of polymer in the solution by 5%, such that the viscosity of the solution decreases, until achieving said thickenings.

In particular embodiments, the percentage by weight of polymer in the solution is from 8 to 21%, preferably 15 to 20%.

According to another particular embodiment, at least one polymer is a polycarbonate, or the polymer is a polycarbonate; according to an especially particular embodiment, the polymer is a polycarbonate in the particular percentages indicated above.

Another object of the invention is a method for manufacturing the filter of the invention comprising nanoparticles (NPs) or active agents in the interior of the electrospun fibers. Said method comprises the following stages:

i) preparing a stable solution or dispersion of the active agent or NPs in the solvents of the polymer or in the mixture of polymer with its solvent, optionally with the aid of surfactants or mixture of surfactants, wherein the percentage by weight of the surfactant is 1-100% with respect to the weight of the nanoparticles or active agents and the percentage by weight of NPs or active agents is between 0.01 and 50% by weight with respect to the polymer;

ii) mechanically stirring or stirring by means of ultrasound the mixture obtained in stage 1), until obtaining a solution/dispersion with a mean diameter or mean particle size distribution value of 350 nm or less;

iii) if the polymer was not incorporated in stage 1, dissolving the polymer with a nanoparticle or active agent ratio by weight of between 0.01-50% by weight with respect to the polymer and mechanically stirring or stirring by means of ultrasound;

iv) electrospinning the fibers from the predispersion prepared in stage iii).

The invention also relates to a method for preparing a filter like the ones defined above, with fibers coated in their external portion with a nanometric coating optionally modified with active agents and/or nanoparticles, which, in addition to stages i) to iii) or i) to iv) previously defined, comprises the following stages:

v) preparing a sol-gel solution with suitable precursors, which comprises:

a) one or more precursors selected from the group of silicon precursors, such as TEOS (tetraethyl orthosilicate), TMOS (tetramethyl orthosilicate), $SiCl_4$ (silicon tetrachloride), GTPMS (3-glycidoxypropyl)methyldiethoxysilane), APTMS ((3-aminopropyl)-diethoxymethylsilane), MPTMS (3-methacryloyloxy-propyl-trimethoxy-silane), MTMS (methyltrimethoxysilane), HDTMS (hexadecyltrimethoxysilane); or from the group of titanium precursors, such as TIPs (Titanium(IV) isopropoxide); or precursors of other metals such as ZIP (zirconium isopropoxide), aluminum (aluminum isopropoxide) or zinc (zinc acetate);

b) an organic solvent, preferably ethanol or isopropyl alcohol;

c) a surfactant or a mixture of surfactants, said surfactants being ionic, non-ionic or amphoteric, wherein the percentage by weight of the surfactant in the mixture is from 1 to 30% with respect to the weight of the nanoparticles or active agents and the percentage by weight of NPs or active agents in the solution is from 1 to 50%;

vi) optionally, adding the NPs or active agents and mechanically stirring or stirring by means of ultrasound, until obtaining a solution/dispersion of active agents or nanoparticles in the stable precursor solvent or solution, where stable means the absence of visible deposits or aggregates, during the deposition process;

vii) impregnating a filter based on electrospun fibers with the sol-gel solution obtained after stage v) and optional stage vi), by means of a dip-coating, spray-coating or curtain-coating process;

viii) curing by means of temperature or at T-20°C with respect to the Tg or Tm of the polymer by means of ultraviolet curing or by means of microwaves.

A further object of the present invention is the use of the filter of the invention for filtering nanoparticles with at least a dimension less than 10 micrometers contained in air or water.

Another object is a device incorporating a filter according to the present invention. The fluid to be filtered is preferably water or air. The device may be, for example, a water filtration system, an air filtration system, preferably ventilation and/or climate-control equipment, protective personal equipment (PPE), a water or air treatment facility.

As indicated above, the filters of the invention could be used in the filtration of fluids; in the case of air filtration, they could be used for the development and manufacture of protective masks, or in ventilation/protection systems. There are air filters on the market, however, which lack or do not show the properties of the filters object of the present invention. The filters described in the present invention can retain very fine particles, such as nanoparticles, and offer low resistance to the passage of air, which is an advantage with respect to current systems, as they present a low drop in pressure. Furthermore, the new properties of the filters will enhance user and environmental safety, since they will prevent bacteria from proliferating on the surface of the filters and their time of use will be increased.

They could also be used for water treatment, since they are capable of absorbing various specific compounds, such as typical water contaminants or new emerging contaminants, and even eliminating them from the medium when doped or coated with photocatalytic materials. Being able to make the filters self-cleaning or preventing the adherence of molecules therein can improve their efficiency and increases their time of use.

**EXAMPLES**

Below, the invention will be further illustrated by means of examples and experimental results. In no case should they be interpreted as being limiting of the scope of the invention, but rather as a mere illustration of the invention.

**Example 1: Manufacturing a filter by means of electrospinning with a fiber and bead structure.**

Polycarbonate (hereinafter, PC) has been selected as the material for manufacturing the filter samples. In manufacturing the samples, a large number of tests have been carried out in which several manufacturing parameters have been modified in order to obtain samples with the desired conditions.

For the purpose of providing comparative data, samples have been developed following two different processes: process A according to the present invention, and process B, included for comparison purposes. In process B, the desired effect was to manufacture the filter with a "standard" structure, that is, that of a non-woven fabric, without beads or thickenings and uniform. For this process, a 20% solution of PC in a 50/50 THF/DMF solvent mixture by weight and 1% by weight of TBAC salt with respect to PC has been prepared. The electrospinning conditions were 15kV of applied voltage, 150 mm of distance between the needle and the collector and 0.1 ml/h of solution dosage. Figure 2 (image on the left) shows the obtained structure.

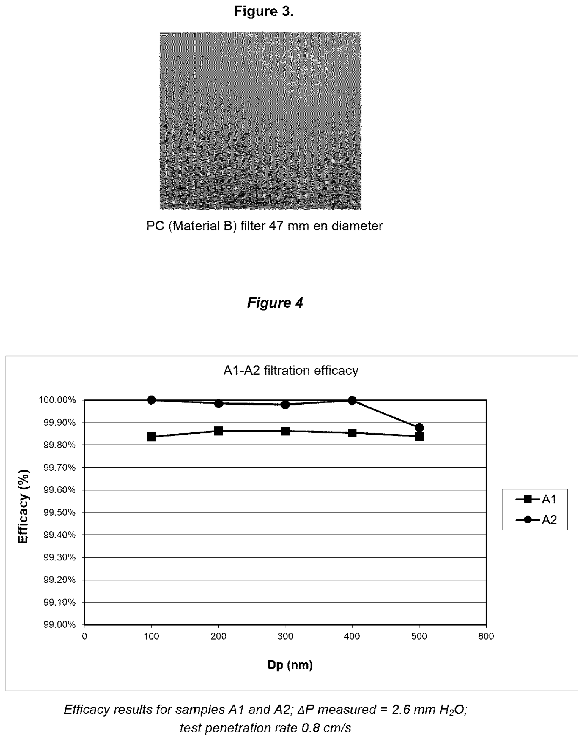

With process A, the desired effect was to introduce a special geometric structure into the entire volume of the filter, referred to as beads or thickenings in the framework of the present invention, for the purpose of improving the quality factor of the filter (Figure 2 on the right). A sample of the manufactured filters is shown in Figure 3. For this process a 20% solution by weight of PC in a 50/50 THF/DMF solvent mixture by weight has been used. The electrospinning conditions were 10kV of applied voltage, 150 mm of distance between the needle and the collector and 0.5 ml/h of solution dosage.

Both processes have been carried out with a needle having an internal diameter of 0.6 mm. Tests were performed at room temperature and at a humidity between 40 and 50%.

In the tested samples, in process A (according to the present invention) the distribution of diameters of the nanofibers ranges in values comprised between 250 and 500nm. The structure of beads is characterized in that it has a mean bead diameter of 3.7 $\mu$m and a bead density of about 250000 per cm$^2$ of filter.

In comparative process B, in which there are only fibers, without thickenings, the nanofiber diameter ranges between 300 and 400 nm.

**Example 2: Filtration efficacy and quality factor**

The experimental method used in the filtration tests is inspired by standard UNE-EN 1822-3. The experimental system used in the tests includes three main parts: the aerosol generation unit, the installation supporting the filter and the particle measuring equipment before and after the filter.

A polydispersed aerosol is generated from a 0.1% NaCl solution with a Collision-type atomizer. The aerosol produced passes through a Nafion membrane dryer that eliminates moisture from the stream. The dry aerosol passes through a bipolar ionizer where the particles are neutralized (acquire a Boltzmann distribution) before being conducted to the DMA (differential mobility analyzer) where the particles are sorted according to their aerodynamic size and it allows the monodisperse aerosol to be obtained. The flow of the monodisperse stream is divided at the outlet of the DMA into two streams: one of them is conducted to a CPC-1 (condensation particle counter) which measures the concentration of particles before entering the filter; the other current goes to the filter holder where the filter to be tested has been placed. The outlet aerosol is taken to CPC-2 which measures the concentration of particles that have gone through the filter. The drop in pressure in the filter holder is measured continuously with a magnahelic gauge. Flows are also controlled during testing.

The aerosol generator and the pre-filtration concentration measuring apparatus are included in the aerosol generator and monitor, AGM (MSP Model 1500) equipment and the post-filtration particle measuring apparatus is included in the humidified tandem differential mobility analyzer, HTDMA, (MSP model 1040XP) equipment.

Table 1 shows the tested materials and samples. Material A is a polycarbonate filter developed following manufacturing process A; two samples of this material have been tested: Sample A1 and Sample A2. Material B is also a polycarbonate filter developed by means of process B; sample B3 of this material has been tested. Lastly, Material C is a commercial glass fiber filter (47 mm PALL glass fiber). Table 2 shows the main characteristics of said reference filter.

**Table 1.**

| List of tested samples. | | |
|---|---|---|
| **Material** | **Sample** | **Description** |
| Material A | 1 | Polycarbonate filter developed by means of electrospinning process A |
| | A2 | |
| Material B (comparative) | B3 | Polycarbonate filter developed by means of electrospinning process B |

(continued)

| List of tested samples. | | |
|---|---|---|
| **Material** | **Sample** | **Description** |
| Reference (comparative) | Glass fiber | 47 mm Pall glass fiber filter |

**Table 2.**

| Main characteristics of the 47 mm PALL reference (comparative) glass fiber filter. | | |
|---|---|---|
| **Filtration medium** | | borosilicate glass |
| **Pore size** | | 1 $\mu$m (nominal) |
| **Typical filter thickness** | | 330 $\mu$m |
| **Typical filter weight** | | N/A |
| **Typical aerosol retention** According to ASTM D 2986-95A 0.3 $\mu$m (DOP) at 32 L/min/100 cm$^2$ of filter | | 99.98% |
| | | |
| **Typical air flow rate** | | 60 L/min/cm$^2$ at 0.7 bar |
| **Typical water flow rate** | | ml/min/cm$^2$ at 0.3 bar |
| **Maximum operating temperature** | | Air 550°C |

The tested filters have a diameter of 47 mm. They are tested in a 47 mm Millipore filter holder, model XX4404700, the filtration area of which is 13.8 cm$^2$.

The tests are performed with monodisperse aerosol of 100-200-300-400 and 500 nm and for each sample the test is repeated three times. The flow rate of monodisperse aerosol at the outlet of the DMA is 1 L/min, which is divided into a stream going to CPC-1 operating at 0.3 L/min and another stream going to the filter holder at 0.7 L/min. Considering the filtration area, the speed through the filtration medium is 0.8 cm/s. This speed is considerably lower than the typical filter test speeds for use in ventilation and personal protection systems which are usually 5-10 and 15 cm/s [UNE-EN 1822-3 High efficiency air filters (EPA, HEPA and ULPA). Part 3: Testing flat sheet filter media; UNE-EN 143:2001/A1 Respiratory protective devices.

Particle filters. Requirements, testing, marking.]. However, these first tests work with a low speed considering that they are the first filtration tests performed with these new materials in which testing of their mechanical resistance to higher air flow rates has not yet been performed.

The mean penetration and efficacy through the filters is calculated by means of the following expression:

$$P = C_{out} / C_{in}$$

and

$$E = 1-P$$

Wherein:

P = mean penetration
E = mean efficacy
$C_{out}$ = mean concentration measured after the filter with CPC-2

$C_{in}$= mean concentration measured before the filter with CPC-1

The quality factor (fq) or figure of merit has further been calculated according to the expression

$$fq = \ln(1/P)/\Delta p = -\ln(P)/\Delta p$$

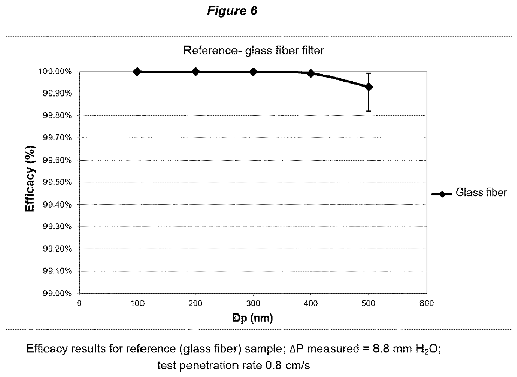

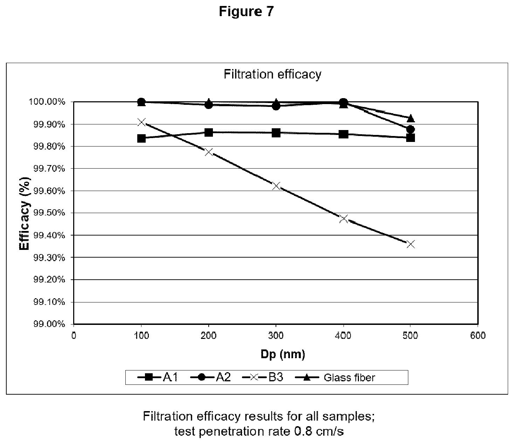

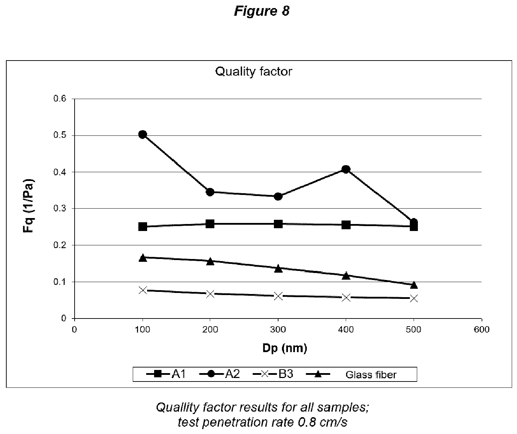

Testing has been performed for the four samples described above (Table 1). The results are presented in % of filtration efficacy for each of the particle sizes between 100 and 500 nm. For each sample, the mean value of efficacy as well as the minimum and maximum values of three tests performed with each of the samples have been depicted. Furthermore, the quality factor (fq) is expressed as 1/Pa (converting the mm H2O measured to Pascals). The obtained results are shown in Table 3. All the penetration values have been rounded off to the second decimal figure.
Figure 4 shows the results for Material A according to the present invention. As can be observed, the data of sample A1 indicates an efficacy between 99.84-99.86%, whereas for sample A2 efficacy is higher, between 99.88 and 100.00%. The data is fairly repetitive in the three tests except for the size of 500 nm, where there is a greater difference between the minimum and maximum values. This scattering of the results is because the number of 500 nm particles of the starting aerosol is fairly low, and therefore mean values are less precise. The drop in pressure in the tests with the two samples is 2.6 mm $H_2O$.

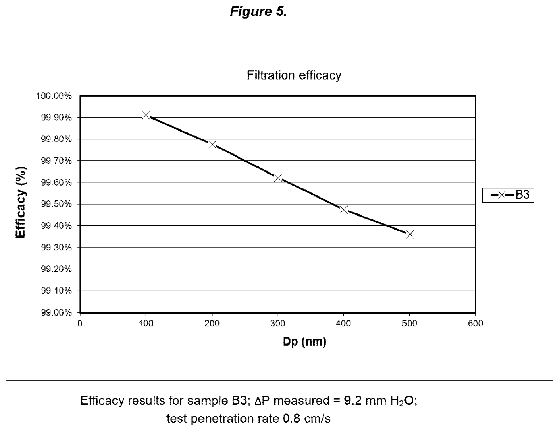

Figure 5 shows the comparative results for Material B, sample B3. It can be seen in this graph that filtration efficacy ranges between 99.36 and 99.91 %. Again, the data is fairly repetitive in the three tests except for the size of 500 nm. In this case the drop in pressure is greater, 9.2 mm $H_2O$.
Lastly, Figure 6 shows the results for the Pall reference filter; in this case the efficacy values are very high and very similar to those of Material A (sample A2), between 99.93 and 100%, and the drop in pressure is 8.0 mm H2O. Like in the preceding cases, the data is fairly repetitive in the three tests except for the size of 500 nm.
To compare the three materials, the graph in Figure 7, which includes the results of the three materials and four samples, has been prepared. As can be observed, sample A2 presents a behavior similar to that of the reference glass fiber, although sample A1 shows an efficacy that is slightly lower than the other two. Lastly, sample B3 shows an efficacy lower than the preceding efficacies, and which decreases as the particle size increases.
In regard to drops in pressure due to the filter, the data shows that for samples according to the present invention (samples A1 and A2), said drop is much lower than the third sample (B3) and the Pall reference filter. This is undoubtedly a surprising result which confirms that variations in the manufacturing process introduced for manufacturing Material A are very positive.
Lastly, Figure 8 shows the quality factor (fq) for the four samples. Consistent with the efficacy and drop in pressure data, samples A1 and A2 show a much higher fq due to their high efficacy and lower drop in pressure. The reference material (glass fiber) would present an intermediate fq given its high efficacy, but would present a drop in pressure greater than the samples according to the present invention. Lastly, sample B3 has the lowest fq, due to its lower efficacy and high drop in pressure.

**Table 3.**

| Summary of filtration efficacy results with the analyzed samples. | | | | | | |
|---|---|---|---|---|---|---|
| **Material** | **Sample** | **Dp\* (nm)** | **Mean efficacy %** | **Maximum** | **Minimum** | **ΔP (mm H2O)** |
| MAT A | A1 | 100 | 99.84% | 99.85% | 99.83% | 2.6 |
| | | 200 | 99.86% | 99.87% | 99.86% | |
| | | 300 | 99.86% | 99.88% | 99.85% | |
| | | 400 | 99.85% | 99.88% | 99.84% | |
| | | 500 | 99.84% | 99.90% | 99.73% | |
| | A2 | 100 | 100.00% | 100.00% | 100.00% | |
| | | 200 | 99.98% | 99.99% | 99.98% | |
| | | 300 | 99.98% | 99.98% | 99.98% | |
| | | 400 | 100.00% | 100.00% | 100.00% | |
| | | 500 | 99.88% | 100.00% | 99.63% | |

(continued)

| Summary of filtration efficacy results with the analyzed samples. | | | | | | |
|---|---|---|---|---|---|---|
| **Material** | **Sample** | **Dp* (nm)** | **Mean efficacy %** | **Maximum** | **Minimum** | **$\Delta$P (mm H2O)** |
| MAT B | B3 | 100 | 99.91% | 99.93% | 99.89% | 9.2 |
| | | 200 | 99.78% | 99.82% | 99.71% | |
| | | 300 | 99.62% | 99.68% | 99.55% | |
| | | 400 | 99.48% | 99.61% | 99.29% | |
| | | 500 | 99.36% | 99.53% | 99.07% | |
| REF | Glass fiber | 100 | 100.00% | 100.00% | 100.00% | 8.0 |
| | | 200 | 100.00% | 100.00% | 100.00% | |
| | | 300 | 100.00% | 100.00% | 99.99% | |
| | | 400 | 99.99% | 99.99% | 99.98% | |
| | | 500 | 99.93% | 99.99% | 99.82% | |
| *Dp = Particle diameter | | | | | | |

The filtration capacity of particles in air in filters manufactured with nanofibers has been significantly improved by means of optimizing electrospinning parameters, and particularly, developing special volumetric geometric structures in nanomeshes, as well as modifying the structural properties thereof.

Upon comparing the results obtained with the nanometric filters manufactured from Material A of the invention and comparative Material B, it is shown that not only has the efficacy of the material been increased, even when the mean diameter of the nanofibers of Material A according to the invention is greater than that of comparative Material B by about 100%, but rather, much more importantly, the drop in pressure has been reduced by 72% and, accordingly, the quality factor has been improved by almost 400%. Furthermore, if compared with the reference (glass fiber) filter, improving the quality factor by a not at all negligible 172% has also been achieved.

***Example 3. Micro/nanofiber filters with improved properties in filtration efficiency and coated to provide them with self-cleaning, antibacterial and/or photocatalytic properties.***

PC filters with beads have been coated with an inorganic coating doped with a silver salt, to provide it with antibacterial capacity. The formulation used has the following TIP ratio: AcAc:EtOH:H2O (HCl 0.1 N) 1:1:200:2 and a concentration of AgNO3 of 0.01% by weight with respect to Si. The coatings have been applied by means of dipping-extraction at an extraction speed of 300 mm/min, and have been cured for 15 h at 80°C. The filters have been coated to study their antibacterial capacity.

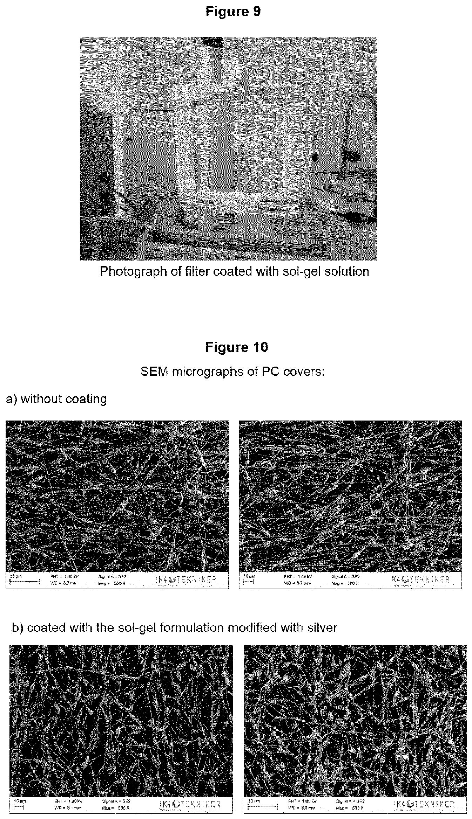

Figure 9 shows a photograph of one of the coated filters and the equipment used for applying the coating.

The coated filters have been characterized by means of scanning electron microscopy (SEM), (Figure 10**Error! The source of the reference cannot be found.**) where it can clearly be observed that the coating is deposited on the nanofibers. In most of the filter, the porous structure thereof is not blocked, so it is demonstrated that the alternative of coating the filter is suitable, although it may be necessary to optimize the coating process.

The antibacterial capacity of the filters has been characterized by means of the Microinstant® CCA Chromogenic Coliform Agar kit (ISO). This is a selective and differential medium for detecting E. coli and total coliforms in water samples by the filtration membrane method. The water sample is filtered through a membrane with a pore diameter of 0.45 $\mu$m, validated according to standard ISO 7704:1985, and the membrane is deposited face up on a plate containing the ACC medium, endeavoring not to form bubbles or creases. The plate with the membrane is incubated for 18-24 hours at 36 $\pm$ 2°C. If at 18 h red or colorless colonies appear, incubation is prolonged up to 24 h to include possible late reactions of $\beta$-galactosidase or of $\beta$-glucuronidase. After the incubation period, colonies having a color ranging from salmon pink to red are counted as coliform bacteria other than E. coli, and those having colors ranging from dark blue to violet are counted as E. coli. The total coliform bacteria count corresponds to the sum of colonies ranging in color from salmon pink to red and the colonies ranging in dark blue to violet.

Taking into account the microbiological tests performed in standard UNE 149101, water has been doped with fecal water to introduce a concentration of E. coli and other coliform bacteria suitable for measurement.

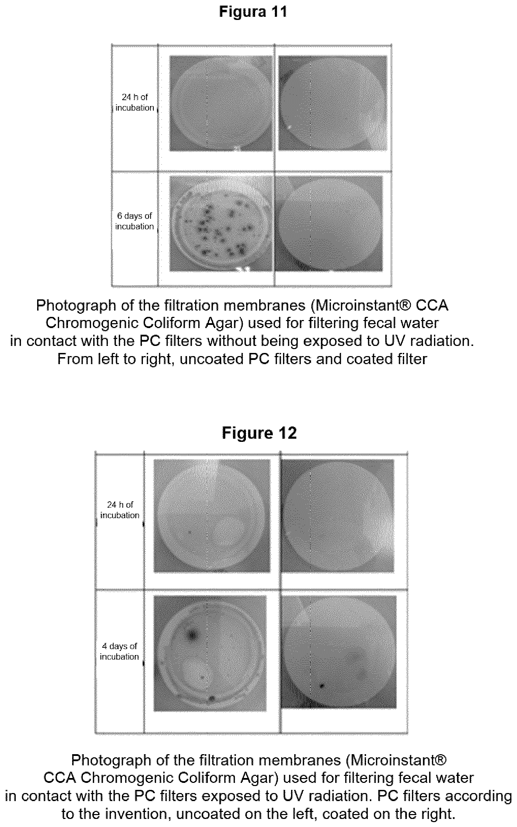

The covers have been in contact with the doped H2O for 24 h, with and without UV light. After this time, the water is filtered according to the established method. Figure 11 shows the final appearance of the filters, uncoated and coated, after 24 h and 4-6 days of incubation.

When the filters are coated with a coating that has silver in them, it can be seen that even though there is no UV light, the filters are capable of preventing the growth of bacteria and no significant colony can be seen. These results indicate the self-cleaning capacity thereof, both under UV radiation and when they are only modified with silver.

***Filtration tests for multifunctional coated filters.***

PC filters with a micro/nano-fiber structure and micro/nanobeads obtained by process A have been coated using the sol-gel technique modified with silver, described above. Filtration tests have been performed in order to analyze the influence of these coatings both in filtration efficacy and in the drop in pressure of these filters with self-cleaning, photocatalytic and/or antibacterial capacity (AA. Figure 13 shows the filters placed in the filter holder before the filtration tests.

Furthermore, filters having greater thickness referenced as A6 and A7 have been manufactured by increasing the time of the electrospinning process to obtain filtration efficacies greater than those obtained with filters without coating A4 and A5.

The results are presented in the following table, in % of mean filtration efficacy for each of the particle sizes between 50 and 400 nm and in drop in pressure in mm H2O. Testing has not been performed with particle sizes of 500 nm because the equipment is unable to generate an amount of particles suitable for being measured.

Two layer-type filters have been tested in order to verify the repeatability of manufacturing same and three filtration measurements of each particle size for which the mean efficacy is depicted have been performed.

Table 4. Summary of results of filtration efficacy and drop in pressure in PC filters

| Ref. Filter | Characteristic filter | Dp (nm) | Mean efficacy % | ΔP (mm H2O) |
|---|---|---|---|---|
| AA1 | Ag coating | 50 | 99.87 | 2.6 |
| | | 100 | 98.51 | |
| | | 200 | 96.26 | |
| | | 300 | 96.35 | |
| | | 400 | 97.88 | |
| AA2 | Ag coating | 50 | 99.87 | |
| | | 100 | 98.52 | |
| | | 200 | 96.36 | |
| | | 300 | 96.42 | |
| | | 400 | 97.16 | |
| A4 | Without coating | 50 | 99.99 | 0.95 |
| | | 100 | 99.87 | |
| | | 200 | 99.47 | |
| | | 300 | 99.41 | |
| | | 400 | 99.54 | |
| A5 | Without coating | 50 | 100.00 | |
| | | 100 | 99.96 | |
| | | 200 | 99.75 | |
| | | 300 | 99.67 | |
| | | 400 | 99.70 | |

(continued)

| Ref. Filter | Characteristic filter | Dp (nm) | Mean efficacy % | $\Delta$P (mm H2O) |
|---|---|---|---|---|
| A6 | Without coating Greater thickness | 50 | 99.99 | 0.93 |
| | | 100 | 100 | |
| | | 200 | 99.99 | |
| | | 300 | 99.98 | |
| | | 400 | 99.96 | |
| A7 | Without coating Greater thickness | 50 | 100 | |
| | | 100 | 100 | |
| | | 200 | 100 | |
| | | 300 | 100 | |
| | | 400 | 99.98 | |

It can be concluded from these results that the silver coating deposited on the filters does not significantly affect the drop in pressure. However, this coating slightly decreases the filtration efficacy, having values between 96.36% and 99.88%, a fact that can be improved by increasing the thickness of the filter before coating, as observed in Figure 14.

The results obtained are repetitive in all cases and generally very high efficacies are obtained, in some cases reaching 100% for all tested particle sizes. The drops in pressure in filters of this type with a bead structure are very low compared with a commercial glass fiber filter, even when the coating is applied (Figure 15).

**Claims**

1. A filter for particles having sizes of less than 10 micrometers, with a structure based on electrospun fibers from one or more polymers, selected from at least one of the groups of polycarbonates, polyamides, polyesters, polyurethanes, styrene groups, halogen groups and biopolymers, the fibers being **characterized in that** they have a diameter between 30 and 1000 nm, and **in that** they have along their structure thickenings of a diameter of between 0.4 and 10 micrometers, with a thickening density of at least 25000 thickenings per cm$^2$ of filter.

2. The filter according to claim 1, **characterized in that** the fibers in the interior of its structure comprise nanoparticles or active agents, with the nanoparticles having at least one dimension of less than 100 nm and being organic, inorganic, ceramic or carbonaceous, and the active agents being selected from biocidal and/or bacteriostatic agents of the type such as isothiazolones, benzoisothiazolones, chloramines, alkyl or aryl chlorides, or silver salts.

3. The filter according to any one of claims 1 or 2, **characterized in that** the fibers are coated in the external portion with an inorganic or organic nanometric coating optionally modified with nanoparticles or active agents, with the nanoparticles having at least one dimension of less than 100 nm, and being organic, inorganic, ceramic or carbonaceous, and the active agents being selected from biocidal and/or bacteriostatic agents of the type such as isothiazolones, benzoisothiazolones, chloramines, alkyl or aryl chlorides, or silver salts.

4. The filter according to any one of claims 2 or 3, **characterized in that** the nanoparticles have antibacterial and/or photocatalytic properties.

5. The filter according to any one of claims 2 to 4, **characterized in that** the nanoparticles are selected from at least one of $TiO_2$, Ag, $CeO_2$, CuO.

6. The filter according to any one of claims 2 or 3, **characterized in that** the active agents are one or more silver salts, preferably silver nitrate ($AgNO_3$), silver chloride (AgCl) or silver sulfate ($Ag_2SO_4$).

7. The filter according to any one of the preceding claims, **characterized in that** at least one of the one or more polymers is polycarbonate, preferably the at least one or more polymers is polycarbonate.

8. A method for preparing the filter defined in claim 1, with fibers comprising a structure with thickenings, which comprises the stages of:

i) preparing a solution based on a polymer or mixture of polymers with its solvent, wherein the percentage by weight of the polymer in the solution is 2-25%;
ii) mechanically stirring the solution until the complete dissolution of the polymer or mixture of polymers, obtaining a predispersion;
iii) electrospinning the fibers from the predispersion prepared in stage ii).

9. A method for preparing the filter defined in claims 2 to 7, with fibers comprising nanoparticles (NPs) or active agents in the interior of the electrospun fibers, **characterized in that** it comprises the stages of:

i) preparing a stable solution or dispersion of the active agent or NPs in the solvents of the polymer or in the mixture of polymer with its solvent, optionally with the aid of surfactants or mixture of surfactants, wherein the percentage by weight of the surfactant is 1-100% with respect to the weight of the nanoparticles or active agents, and the percentage by weight of NPs or active agents is between 0.01 and 50% by weight with respect to the polymer.
ii) mechanically stirring or stirring by means of ultrasound the mixture obtained in stage 1), until obtaining a solution/dispersion with a mean diameter or mean particle size distribution value of 350 nm or less;
iii) if the polymer was not incorporated in stage 1, dissolving the polymer for it to have a nanoparticle or active agent concentration of between 0.01-50% by weight with respect to the polymer and mechanically stirring or stirring by means of ultrasound;
iv) electrospinning the fibers from the predispersion prepared in stage iii).

10. A method for preparing a filter defined in claims 3 to 7, with fibers coated in their external portion with a nanometric coating optionally modified with active agents and/or nanoparticles, **characterized in that** after stages i) to iii) defined in claim 8, or after stages i) to iv) defined in claim 9, it comprises the stages of:

v) preparing a sol-gel solution with suitable precursors, which comprises:

a) one or more precursors selected from the group of silicon precursors, such as TEOS (tetraethyl ortho-silicate), TMOS (tetramethyl orthosilicate), $SiCl_4$ (silicon tetrachloride), GTPMS (3-glycidoxypropyl)methyldiethoxysilane), APTMS ((3-aminopropyl)-diethoxymethylsilane), MPTMS (3-methacryloyloxy-propyl-trimethoxy-silane), MTMS (methyltrimethoxysilane), HDTMS (hexadecyltrimethoxysilane); or from the group of titanium precursors, such as TIPs (Titanium(IV) isopropoxide); or precursors of other metals such as ZIP (zirconium isopropoxide), aluminum (aluminum isopropoxide) or zinc (zinc acetate);
b) an organic solvent, preferably ethanol or isopropyl alcohol;
c) a surfactant or a mixture of surfactants, said surfactants being ionic, non-ionic or amphoteric, wherein the percentage by weight of the surfactant in the mixture is from 1 to 30% with respect to the weight of the nanoparticles or active agents and the percentage by weight of NPs or active agents in the solution is from 1 to 50%;

vi) optionally, adding the NPs or active agents and mechanically stirring or stirring by means of ultrasound, until obtaining a solution/dispersion of active agents or nanoparticles in the stable precursor solvent or solution, where stable means the absence of visible deposits or aggregates, during the deposition process;
vii) impregnating the filter obtained after stage iv) with the sol-gel solution obtained after stage v) and optional stage vi), by means of a dip-coating, spray-coating or curtain-coating process;
viii) curing by means of temperature at T-20 °C with respect to the Tg or Tm of the polymer, by means of ultraviolet curing, or by means of microwaves.

11. Use of the filter of any one of claims 1 to 7, for filtering nanoparticles with at least a dimension less than 10 micrometers contained in air or water.

12. A device for filtering a fluid, **characterized in that** it contains a filter according to any one of claims 1 to 7.

13. The device according to claim 12, wherein the fluid is air or water.

14. The device according to any one of claims 12 or 13, wherein the device is a water filtration system, an air filtration system, preferably ventilation and/or climate-control equipment, protective personal equipment (PPE), a water or air treatment facility.

15. A self-cleaning filtration device, **characterized in that** it contains a filter according to any one of claims 1 to 7 and a UV lamp.

**FIGURE 1**

Adaptation of page 29 of standard UNE-ISO/TR 12885:2010 IN "Nanotechnologies.
Health and safety practices in occupational settings relevant to nanotechnologies"
[AENOR. The complete text of the standard can be found at the following link:

http://www.aenor.es/aenor/normas/normas/fichanorma.asp?tipo=N&codigo=N0046427
&PDF=Si].

**FIGURE 2**

SEM micrograph of a PC nanomesh manufactured with Process B (left) and
manufactured with Process A (right).

**Figure 3.**

PC (Material B) filter 47 mm en diameter

*Figure 4*

*Efficacy results for samples A1 and A2; ΔP measured = 2.6 mm H$_2$O;*
*test penetration rate 0.8 cm/s*

Figure 5.

Efficacy results for sample B3; ΔP measured = 9.2 mm $H_2O$;
test penetration rate 0.8 cm/s

Figure 6

Efficacy results for reference (glass fiber) sample; ΔP measured = 8.8 mm $H_2O$; test penetration rate 0.8 cm/s

**Figure 7**

Filtration efficacy results for all samples;
test penetration rate 0.8 cm/s

*Figure 8*

Quallity factor results for all samples;
test penetration rate 0.8 cm/s

**Figure 9**

Photograph of filter coated with sol-gel solution

**Figure 10**

SEM micrographs of PC covers:

a) without coating

b) coated with the sol-gel formulation modified with silver

**Figura 11**

Photograph of the filtration membranes (Microinstant® CCA
Chromogenic Coliform Agar) used for filtering fecal water
in contact with the PC filters without being exposed to UV radiation.
From left to right, uncoated PC filters and coated filter

**Figure 12**

Photograph of the filtration membranes (Microinstant®
CCA Chromogenic Coliform Agar) used for filtering fecal water
in contact with the PC filters exposed to UV radiation. PC filters according
to the invention, uncoated on the left, coated on the right.

**Figure 13**

Left: PC filter without coating (A4).
Right: Filter with Ag coating (AA1).

**Figure 14**

*Figure 14: Efficacy results for PC filters with and without Ag coating.*
*Test penetration rate: 0.5 cm/s.*

**Figure 15**

*Figure 15: Drop in pressure in filters with and without coating (AA11 and A5, respectively) and commercial glass fiber filter at different aire flow rates.*

Europäisches
Patentamt

European
Patent Office

Office européen
des brevets

## EUROPEAN SEARCH REPORT

Application Number

EP 20 38 2224

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/080148 A1 (WESTERHOFF PAUL K [US] ET AL) 22 March 2018 (2018-03-22) * paragraph [0064] - paragraph [0088]; claims 1-7; figures 8a,8b * | 1-15 | INV. B01D67/00 B01D39/16 |
| X | CN 103 952 783 A (UNIV SOOCHOW) 30 July 2014 (2014-07-30) | 1,8, 11-15 | |
| Y | * the whole document * | 2-7,9,10 | |
| X | WO 2013/051185 A1 (PANASONIC CORP [JP]; ORIBE MIO ET AL.) 11 April 2013 (2013-04-11) * paragraph [0021] - paragraph [0047]; figures 2-3b * | 1,7,8, 11-15 | |
| X | CN 106 984 201 A (UNIV HEBEI SCIENCE & TECH) 28 July 2017 (2017-07-28) * the whole document * | 1,8, 11-15 | |
| X | CHO CHIA-JUNG ET AL: "Green electrospun nanofiber membranes filter prepared from novel biomass thermoplastic copolyester: Morphologies and filtration properties", JOURNAL OF THE TAIWAN INSTITUTE OF CHEMICAL ENGINEERS, ELSEVIER, AMSTERDAM, NL, vol. 106, 22 November 2019 (2019-11-22), pages 206-214, XP086011950, ISSN: 1876-1070, DOI: 10.1016/J.JTICE.2019.11.002 [retrieved on 2019-11-22] * page 209 - page 211; figures 1,2 * | 1 | TECHNICAL FIELDS SEARCHED (IPC) B01D |
| Y | KR 100 811 205 B1 (AMOSENSE CO LTD [KR]) 7 March 2008 (2008-03-07) * the whole document * | 2,4-7,9 | |

-/--

The present search report has been drawn up for all claims

| Place of search | Date of completion of the search | Examiner |
|---|---|---|
| Munich | 16 July 2020 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 38 2224

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2018/027479 A1 (UNIV HONG KONG [CN]) 15 February 2018 (2018-02-15) * the whole document * ----- | 3,10 | |
| A | EP 2 881 157 A1 (NANO & ADVANCED MATERIALS INST LTD [CN]) 10 June 2015 (2015-06-10) * the whole document * ----- | 1-15 | |
| X | WO 2013/142306 A1 (UNIV CORNELL [US]) 26 September 2013 (2013-09-26)<br><br>* paragraph [0068] - paragraph [0089]; figure 2 * ----- | 1,2,4-6, 8,9, 11-15 | |

TECHNICAL FIELDS
SEARCHED      (IPC)

The present search report has been drawn up for all claims

| Place of search | Date of completion of the search | Examiner |
|---|---|---|
| Munich | 16 July 2020 | Marti, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 20 38 2224

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2020

| Patent document cited in search report | | | Publication date | Patent family member(s) | | | Publication date |
|---|---|---|---|---|---|---|---|
| US 2018080148 | A1 | | 22-03-2018 | NONE | | | |
| CN 103952783 | A | | 30-07-2014 | NONE | | | |
| WO 2013051185 | A1 | | 11-04-2013 | CN | 103732302 | A | 16-04-2014 |
| | | | | WO | 2013051185 | A1 | 11-04-2013 |
| CN 106984201 | A | | 28-07-2017 | NONE | | | |
| KR 100811205 | B1 | | 07-03-2008 | NONE | | | |
| WO 2018027479 | A1 | | 15-02-2018 | CN | 109789377 | A | 21-05-2019 |
| | | | | US | 2019168172 | A1 | 06-06-2019 |
| | | | | WO | 2018027479 | A1 | 15-02-2018 |
| EP 2881157 | A1 | | 10-06-2015 | CN | 104689641 | A | 10-06-2015 |
| | | | | CN | 106861289 | A | 20-06-2017 |
| | | | | EP | 2881157 | A1 | 10-06-2015 |
| | | | | EP | 3175903 | A1 | 07-06-2017 |
| | | | | HK | 1210983 | A1 | 13-05-2016 |
| | | | | US | 2015157971 | A1 | 11-06-2015 |
| | | | | US | 2017007950 | A1 | 12-01-2017 |
| | | | | US | 2017007952 | A1 | 12-01-2017 |
| WO 2013142306 | A1 | | 26-09-2013 | EP | 2828422 | A1 | 28-01-2015 |
| | | | | JP | 2015516518 | A | 11-06-2015 |
| | | | | KR | 20140136993 | A | 01-12-2014 |
| | | | | US | 2015044464 | A1 | 12-02-2015 |
| | | | | US | 2018209072 | A1 | 26-07-2018 |
| | | | | WO | 2013142306 | A1 | 26-09-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 07090102 A2, Li, S., Hashi, C., Huang, N.F., Kurpinski, K.
- CN 105999852

### Non-patent literature cited in the description

- **NEL, A.** Air pollution-related illness: effects of particles. *Science,* 2005, vol. 308, 804-806
- **MAHOWALD, N.** Aerosol indirect effect on biogeochemical cycles and climate. *Science,* 2011, vol. 334, 794-796
- **HORTON, D. E. ; SKINNER, C. B. ; SINGH, D. ; DIFFENBAUGH, N. S.** Occurrence and persistence of future atmospheric stagnation events. *Nat. Clim. Change,* 2014, vol. 4, 698-703
- **ANDREAE, M. O. ; ROSENFELD, D.** Aerosol-cloud-precipitation interactions. Part 1. The nature and sources of cloud-active aerosols. *Earth Sci. Rev.,* 2008, vol. 89, 13-41
- European Environment Agency. *Air Quality in Europe - 2013 Report,* 2013, ISSN 1725-9177
- **RONALD E. ; SHAFFER Æ ; SAMY RENGASAMY.** *J Nanopart Res,* 2009, vol. 11, 1661-1672
- **QIANG WANG ; LALEH GOLSHAHI ; DA-REN CHEN.** *Aerosol and Air Quality Research,* 2017, vol. 17, 2681-2690
- **HAI-SHENG WANG ; GUO-DONG FU ; XIN-SONG LI.** Functional Polymeric Nanofibers from Electrospinning. *Recent Patents on Nanotechnology,* 2009, vol. 3, 21-31
- **HINDS, W. C.** Aerosol Technology. Properties, Behaviour and Measurement of Airborne Particles. John Wiley & Sons, 1999, 483
- **CHENYU WANG ; JUN WANG ; LIANGDAN ZENG ; ZIWEN QIAO ; XIAOCHEN LIU ; HE LIU ; JIN ZHANG ; JIANXUN DING.** *Molecules,* March 2019, vol. 24 (5), 834
- **CHUAN YIN ; RINO OKAMOTO ; MIKIHISA KONDO ; TOSHIHISA TANAKA ; HATSUHIKO HATTORI ; MASAKI TANAKA ; HIROMASA SATO ; SHOTA LINO ; YOSHITAKA KOSHIRO.** *Nanomaterials,* 2018, vol. 9 (1), 34